# EUROPEAN PATENT SPECIFICATION

(11) **EP 3 778 232 B1**
(45) Date of publication and mention of the grant of the patent: **01.05.2024**
(21) Application number: 19777149.6
(22) Date of filing: 20.03.2019
(51) Int. Cl.: B32B 27/32, B65D 65/40

(54) **LAMINATE FILM, PACKAGING MATERIAL, AND PACKAGING BODY**
LAMINATFOLIE, VERPACKUNGSMATERIAL UND VERPACKUNGSKÖRPER
FILM STRATIFIÉ, MATÉRIAU D'EMBALLAGE ET CORPS D'EMBALLAGE

(30) Priority: 27.03.2018 JP 2018059969
(43) Date of publication of application: 17.02.2021
(73) Proprietor: Dow-Mitsui Polychemicals Co., Ltd., Tokyo 104-0028 (JP)
(72) Inventor: HASHIMOTO Hidenori, Ichihara-shi, Chiba 299-0108 (JP); OGATA Takuya, Ichihara-shi, Chiba 299-0108 (JP)
(74) Representative: Gulde & Partner
(86) International application number: PCT/JP2019/011813
(87) International publication number: WO 2019/188696

(56) References cited:
- JP-A- 2001 348 468
- JP-A- 2001 348 468
- JP-A- 2008 031 380
- JP-A- 2016 068 567
- JP-A- 2016 068 567

## Description

### TECHNICAL FIELD

The present invention relates to a laminated film, a packaging material, and a package.

### BACKGROUND ART

Regarding a laminated film for packaging, laminated films produced by bonding an ionomer resin layer formed from an ionomer resin together with a substrate film are known.

Regarding a technology relating to such a laminated film for packaging, for example, the technologies described in Patent Document 1 (Japanese Laid-Open Patent Publication No. 2000-202956) and Patent Document 2 (Japanese Laid-Open Patent Publication No. 2002-210895) may be mentioned.

Patent Document 1 describes a transversely easily tearable laminated film that substantially does not exhibit longitudinal tearability, the laminated film being a co-extruded film of an ethylene-unsaturated carboxylic acid copolymer ionomer (A) and an ethylene-α-olefin copolymer (B), which may include polyethylene at a proportion of up to 50% by weight and has a density of 870 to 940 kg/m³, wherein the transversely easily tearable laminated film has a transverse tear strength in the range of 50 to 300 N/cm.

Patent Document 2 describes a transversely easily tearable composite film having a first layer, a second layer, and a third layer laminated in this order, the first layer being formed from a linear low-density polyethylene (A), the second layer being formed from an ionomer resin (B), the third layer being formed from a linear low-density polyethylene resin (A), wherein the linear low-density polyethylene (A) forming the first layer and the third layer is an ethylene-α-olefin copolymer produced using a metallocene-based catalyst for olefin polymerization, and the linear low-density polyethylene (A) has a density (d: ASTM D1505) of 0.905 to 0.950 g/cm³ and a melt flow rate (MFR: ASTM D1238, 190°C, load 2.16 kg) of 0.5 to 4.0 g/10 min.

Patent Document 3 discloses a laminated film used for packaging materials having improved tearability. The laminated film comprises a substrate film and a resin layer coated thereon. The resin layer comprises a blended material comprising 50 to 99.5 wt% of an ethylene polymer and 0.5 to 50 wt% of an ethylene-type ionomer.

Patent Document 4 describes a heat shinking film comprising ethylene-type ionomer.

### RELATED DOCUMENT

### PATENT DOCUMENT

| | |
|---|---|
| [Patent Document 1] | JP 2000-202956 A |
| [Patent Document 2] | JP 2002-210895 A |
| [Patent Document 3] | JP 2001-348468 A |
| [Patent Document 4] | JP 2016-068567 A |

### SUMMARY OF THE PRESENT INVENTION

### TECHNICAL PROBLEM

The demand for the technological level of various characteristics of laminated films for packaging is ever increasing. According to the investigation of the inventors of the present invention, it was found that the laminated films each including a substrate film and an ionomer resin layer as described in Patent Documents 1 and 2 may have poor tearability in any one or both of the MD direction and the TD direction.

The present invention was achieved in view of the above-described circumstances, and it is an object of the present invention to provide a laminated film having excellent tearability.

### SOLUTION TO PROBLEM

The inventors of the present invention repeatedly conducted a thorough investigation in order to achieve the object described above. As a result, the inventors found that when an ionomer resin layer having the metal ion content in a particular range is formed on a substrate layer, a laminated film having excellent tearability in both the MD direction and the TD direction may be obtained, thus completing the present invention.

That is, according to the present invention, a laminated film, a packaging material, and a package as disclosed in the appended claims 1, 12 and 13 are provided. Further, preferred embodiments are covered by the dependent claims.

### ADVANTAGEOUS EFFECTS OF INVENTION

According to the present invention, a laminated film having excellent tearability can be provided.

### BRIEF DESCRIPTION OF THE DRAWINGS

The purpose described above as well as other purposes, features, and advantages will be further made clear by means of the suitable embodiments described below and the following drawings attached thereto.

Fig. 1 is a cross-sectional view schematically illustrating an example of the structure of a laminated film according to an embodiment of the present invention.
Fig. 2 is a cross-sectional view schematically illustrating an example of the structure of a laminated film according to an embodiment of the present invention.

### DESCRIPTION OF EMBODIMENTS

Hereinafter, embodiments of the present invention will be described using the drawings. Unless particularly stated otherwise, the expression "X to Y" for a value range represents more than or equal to X and less than or equal to Y.

### 1. Laminated film

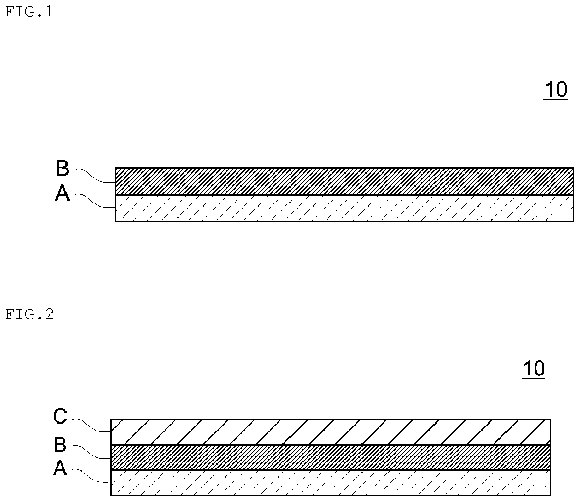

Fig. 1 is a cross-sectional view schematically illustrating an example of the structure of a laminated film 10 according to an embodiment of the present invention.

The laminated film 10 according to the present embodiment is a laminated film including at least a substrate layer (A); and an ionomer resin layer (B) that is provided on one surface of the substrate layer (A) and contains an ionomer of ethylene-unsaturated carboxylic acid-based copolymer (B1), in which when the content of the unsaturated carboxylic acid in the ethylene-unsaturated carboxylic acid copolymer (B2) constituting the ionomer of ethylene-unsaturated carboxylic acid-based copolymer (B1) is designated as X [mass%], and the degree of neutralization of the ionomer of ethylene-unsaturated carboxylic acid-based copolymer (B1) is designated as Y [mol%], the metal ion content represented by the formula: X × Y / 100 is more than 5.0 and less than or equal to 20.0.

As described above, according to the investigation conducted by the inventors of the present invention, it was found that the laminated films each including a substrate film and an ionomer resin layer as described in Patent Documents 1 and 2 may have poor tearability in any one or both of the MD direction and the TD direction.

The inventors of the present invention repeatedly conducted a thorough investigation in order to achieve the object described above. As a result, the inventors found that when an ionomer resin layer (B) containing an ionomer of ethylene-unsaturated carboxylic acid-based copolymer (B1) having a metal ion content represented by the formula: X × Y / 100 in the range of more than 5.0 and less than or equal to 20.0, is formed on one surface of the substrate layer (A), a laminated film 10 having excellent tearability in both the MD direction and the TD direction is obtained.

That is, the laminated film 10 according to the present embodiment can acquire satisfactory tearability by having the layer configuration described above.

The laminated film 10 according to the present embodiment is preferably such that the tear strengths in the MD direction and the TD direction of the ionomer resin layer (B) as measured according to JIS K7128 (1998) are respectively 5.0 N or less. The tear strength in the MD direction is more preferably 4.0 N or less, and even more preferably less than 3.5 N. The tear strength in the TD direction is more preferably 4.5 N or less. The lower limit is not particularly limited; however, it is preferable that the tear strengths in the MD direction and the TD direction are both 0.1 N or more. Thereby, the tearability of the laminated film 10 according to the present embodiment can be further improved.

Hereinafter, the various layers constituting the laminated film 10 according to the present embodiment will be explained.

### <Substrate layer (A)>

The substrate layer (A) is a layer provided for the purpose of improving the handleability, mechanical characteristics, and characteristics such as electrical conductivity, thermal insulation properties, heat resistance, and barrier properties of the laminated film 10. Examples of the substrate layer (A) include a metal foil (copper foil, aluminum foil, or the like), a polyamide film, a polypropylene film, a polyester film, a polyimide film, a polyvinylidene chloride film, an ethylene-vinyl acetate copolymer film, an aluminum deposited film, paper, and a cellophane. These may be used singly, or two or more kinds thereof may be used in combination. These may be uniaxially or biaxially stretched products.

Among these, from the viewpoint of having excellent mechanical strength, pinhole resistance, and the like, at least one selected from the group consisting of a metal foil, a polyolefin film, a polyester film, a polyamide film, and a cellophane is preferred.

The substrate layer (A) may be a single layer, or may be a laminate of two or more kinds of layers.

Furthermore, from the viewpoint of improving the barrier properties of the laminated film 10, it is preferable that the substrate layer (A) includes a metal foil. Examples of the metal foil include an aluminum foil and a copper foil.

From the viewpoint of obtaining satisfactory film characteristics, the thickness of the substrate layer (A) is preferably more than or equal to 1 um and less than or equal to 200 µm, more preferably more than or equal to 3 µm and less than or equal to 100 µm, and even more preferably more than or equal to 5 um and less than or equal to 80 um.

The substrate layer (A) may be subjected to a surface treatment in order to ameliorate the adhesiveness with other layers. Specifically, the substrate layer (A) may be subjected to a corona treatment, a plasma treatment, an anchor coating treatment, and a primer coating treatment.

### <Ionomer resin layer (B)>

The ionomer resin layer (B) according to the present embodiment is formed using a resin composition including an ionomer of ethylene-unsaturated carboxylic acid-based copolymer (B1).

The content of the ionomer of ethylene-unsaturated carboxylic acid-based copolymer (B1) in the ionomer resin layer (B) is, from the viewpoint of further enhancing the tearability of the laminated film 10, is 70% by mass or more, preferably 80% by mass or more, more preferably 90% by mass or more, and particularly preferably 95% by mass or more, when the total amount of the ionomer resin layer (B) is designated as 100% by mass. The upper limit of the content of the ionomer of ethylene-unsaturated carboxylic acid-based copolymer (B1) is 100% by mass or less.

In regard to the ionomer of ethylene-unsaturated carboxylic acid-based copolymer (B1), the metal ion content represented by the formula: X × Y / 100 is more than 5.0 and less than or equal to 20.0. However, from the viewpoint of further enhancing tearability, the metal ion content is preferably 6.0 or more, and from the viewpoint of enhancing the film-forming properties of the ionomer resin layer (B), the metal ion content is preferably 18.0 or less, more preferably 15.0 or less, even more preferably 12.0 or less, and particularly preferably 10.0 or less.

The thickness of the ionomer resin layer (B) is, for example, more than or equal to 1 um and less than or equal to 100 µm, preferably more than or equal to 3 um and less than or equal to 80 um, and more preferably more than or equal to 5 um and less than or equal to 40 um. Furthermore, from the viewpoint of improving the extrusion coatability of the ionomer resin layer (B), the thickness of the ionomer resin layer (B) is preferably 5 µm or more, and more preferably 10 um or more. From the viewpoint of further improving the tearability of the laminated film 10, the thickness of the ionomer resin layer (B) is preferably 40 um or less, more preferably 30 um or less, and even more preferably 25 um or less.

The ethylene-unsaturated carboxylic acid-based copolymer (B2), which serves as a base resin for the ionomer of ethylene-unsaturated carboxylic acid-based copolymer (B1), is a polymer obtained by copolymerizing at least ethylene and a monomer selected from unsaturated carboxylic acids as copolymerization components, and if necessary, a monomer other than ethylene and an unsaturated carboxylic acid-based monomer may be further copolymerized.

The copolymer may be any one of a block copolymer, a random copolymer, and a graft copolymer; however, when productivity is considered, it is preferable to use a binary random copolymer, a ternary random copolymer, a graft copolymer of a binary random copolymer, or a graft copolymer of a ternary random copolymer, and it is more preferable to use a binary random copolymer or a ternary random copolymer.

It is preferable that the ethylene-unsaturated carboxylic acid-based copolymer (B2) is at least one selected from the group consisting of an ethylene-unsaturated carboxylic acid binary copolymer and an ethylene-unsaturated carboxylic acid alkyl ester-unsaturated carboxylic acid ternary copolymer.

Examples of the unsaturated carboxylic acid include unsaturated carboxylic acids having 4 to 8 carbon atoms, or half esters thereof, such as acrylic acid, methacrylic acid, ethacrylic acid, itaconic acid, itaconic anhydride, fumaric acid, crotonic acid, maleic acid, maleic anhydride, a maleic acid monoester (monomethyl maleate, monoethyl maleate, or the like), and a maleic anhydride monoester (monomethyl maleic anhydride, monoethyl maleic anhydride, or the like).

Among these, it is preferable, from the viewpoint of the productivity for the ethylene-unsaturated carboxylic acid-based copolymer (B2) or the like, that the unsaturated carboxylic acid includes at least one selected from acrylic acid and methacrylic acid. These unsaturated carboxylic acids may be used singly, or two or more kinds thereof may be used in combination.

The ethylene-unsaturated carboxylic acid-based copolymer (B2) is a copolymer obtained by copolymerizing at least ethylene with an unsaturated carboxylic acid, and may be a multi-component copolymer such as a ternary or higher copolymer having a third copolymerization component further copolymerized thereinto.

In regard to the multi-component copolymer, in addition to ethylene and (meth) acrylic acid that can be copolymerized with this ethylene, an unsaturated carboxylic acid ester (for example, a (meth)acrylic acid alkyl ester such as methyl acrylate, ethyl acrylate, isobutyl acrylate, n-butyl acrylate, isooctyl acrylate, methyl methacrylate, ethyl methacrylate, isobutyl methacrylate, dimethyl maleate, or diethyl maleate), a vinyl ester (for example, vinyl acetate or vinyl propionate), an unsaturated hydrocarbon (for example, propylene, butane, 1,3-butadiene, pentene, 1,3-pentadiene, or 1-hexene), an oxide such as vinyl sulfate or vinyl nitrate, a halogen compound (for example, vinyl chloride or vinyl fluoride), a vinyl group-containing primary or secondary amine compound, carbon monoxide, sulfur dioxide, or the like may be copolymerized as a third copolymerization component into the copolymer.

Among these, the third copolymerization component is preferably an unsaturated carboxylic acid ester, and more preferably a (meth)acrylic acid alkyl ester (a preferred number of carbon atoms of the alkyl moiety is 1 to 4) .

The content proportion of a constituent unit derived from the third copolymerization component in the ethylene-(meth)acrylic acid-based copolymer is preferably in the range of 25% by mass or less.

When the content proportion of the constituent unit derived from the third copolymerization component is less than or equal to the above-mentioned upper limit, it is preferable from the viewpoint of production and mixing.

In regard to the ethylene-unsaturated carboxylic acid-based copolymer (B2) according to the present embodiment, the content of a constituent unit derived from ethylene is, when the amount of all the constituent units of the ethylene-unsaturated carboxylic acid-based copolymer (B2) is designated as 100% by mass, preferably more than or equal to 65% by mass and less than or equal to 95% by mass, more preferably more than or equal to 75% by mass and less than or equal to 93% by mass, and even more preferably more than or equal to 80% by mass and less than or equal to 92% by mass.

In regard to the ethylene-unsaturated carboxylic acid-based copolymer (B2) according to the present embodiment, the content of a constituent unit derived from an unsaturated carboxylic acid (that is, content X of the unsaturated carboxylic acid) is, when the amount of all the constituent units of the ethylene-unsaturated carboxylic acid-based copolymer (B2) is designated as 100% by mass, preferably more than or equal to 5% by mass and less than or equal to 35% by mass, more preferably more than or equal to 7% by mass and less than or equal to 25% by mass, and even more preferably more than or equal to 8% by mass and less than or equal to 20% by mass.

Here, the content (X) of the unsaturated carboxylic acid in the ethylene-unsaturated carboxylic acid-based copolymer (B2) can be measured by, for example, Fourier transform infrared spectroscopy (FT-IR) .

Examples of the metal ion that constitutes the ionomer of ethylene-unsaturated carboxylic acid-based copolymer (B1) according to the present embodiment include alkali metal ions such as lithium ion, potassium ion, and sodium ion; and polyvalent metal ions such as calcium ion, magnesium ion, zinc ion, aluminum ion, and barium ion. These metal ions may be used singly, or two or more kinds thereof may be used in combination.

Among these, it is preferable that the metal ion includes at least one selected from sodium ion, zinc ion, and magnesium ion.

The degree of neutralization of the ionomer of ethylene-unsaturated carboxylic acid-based copolymer (B1) according to the present embodiment is not particularly limited; however, from the viewpoint of further enhancing processability or moldability, the degree of neutralization is preferably 95 mol% or less, more preferably 90 mol% or less, even more preferably 85 mol% or less, and particularly preferably 80 mol% or less.

Furthermore, the degree of neutralization of the ionomer of ethylene-unsaturated carboxylic acid-based copolymer (B1) according to the present embodiment is not particularly limited; however, from the viewpoint of further enhancing the tearability, heat resistance, and processability of the laminated film 10, the degree of neutralization is preferably 5 mol% or more, more preferably 10 mol% or more, even more preferably 15 mol% or more, and particularly preferably 20 mol% or more.

Here, the degree of neutralization of the ionomer of ethylene-unsaturated carboxylic acid-based copolymer (B1) can be measured by, for example, an incineration residue analysis method.

The method for producing the ionomer of ethylene-unsaturated carboxylic acid-based copolymer (B1) is not particularly limited, and the ionomer can be produced by any known method. Furthermore, a commercially available product may be used for the ionomer of ethylene-unsaturated carboxylic acid-based copolymer (B1).

According to the present embodiment, the melt flow rate (MFR) of the ionomer of ethylene-unsaturated carboxylic acid-based copolymer (B1) as measured according to JIS K7210:1999 under the conditions of 190°C and a load of 2,160 g, is preferably more than or equal to 0.1 g/10 min and less than or equal to 30 g/10, more preferably more than or equal to 0.3 g/10 min and less than or equal to 15 g/10 min, and particularly preferably more than or equal to 0.5 g/10 min and less than or equal to 10 g/10 min. When the MFR has a value more than or equal to the above-mentioned lower limit, the interlayer adhesiveness between the substrate layer (A) and the ionomer resin layer (B), or the interlayer adhesiveness between the heat-sealable layer (C) that will be described below and the ionomer resin layer (B) becomes more satisfactory. As a result, the tearability of the laminated film 10 can be further improved. As the MFR has a value less than or equal to the above-mentioned upper limit, stable extrusion coating processing molding with high accuracy is enabled.

In the ionomer resin layer (B), a component other than the ionomer of ethylene-unsaturated carboxylic acid-based copolymer (B1) can be incorporated to the extent that does not impair the purpose of the present invention. There are no particular limitations on the other component; however, examples include a plasticizer, an oxidation inhibitor, an ultraviolet absorber, an antistatic agent, a surfactant, a coloring agent, a photostabilizer, a foaming agent, a lubricating agent, a nucleating agent, a crystallization accelerator, a crystallization retarder, a catalyst deactivator, a thermoplastic resin other than the ionomer of ethylene-unsaturated carboxylic acid-based copolymer (B1) , a thermosetting resin, an inorganic filler, an organic filler, an impact resistance improver, a slipping agent, a crosslinking agent, a crosslinking aid, a tackifier, a silane coupling agent, a processing aid, a mold releasing gent, a hydrolysis inhibitor, a heat-resistant stabilizer, an antiblocking agent, an antifogging agent, a flame retardant, a flame retardant aid, a light diffusing agent, an antibacterial agent, an antifungal agent, a dispersant, and other resins. The other components may be used singly, or two or more kinds thereof may be used in combination.

### <Heat-sealable layer (C)>

Fig. 2 is a cross-sectional view schematically illustrating an example of the structure of the laminated film 10 according to an embodiment of the present invention.

The laminated film 10 according to the present embodiment may further include a heat-sealable layer (C) in order to impart heat-sealability to the laminated film 10.

It is preferable that, as shown in Fig. 2, the heat-sealable layer (C) is provided on a surface of the ionomer resin layer (B), the surface being on the opposite side of the surface where the substrate layer (A) is provided.

The heat-sealable layer (C) is a layer for imparting heat-sealability to the laminated film 10 according to the present embodiment, and the heat-sealable layer (C) contains, for example, a thermoplastic resin (C1).

The thickness of the heat-sealable layer (C) is, for example, more than or equal to 1 um and less than or equal to 300 µm, preferably more than or equal to 5 um and less than or equal to 200 µm, and more preferably more than or equal to 10 um and less than or equal to 150 µm.

Examples of the thermoplastic resin (C1) according to the present embodiment include polyolefins, for example polyethylenes such as a high-density polyethylene, a high-pressure low-density polyethylene, a low-density polyethylene (LDPE), and a linear low-density polyethylene (LLDPE); and an ethylene-unsaturated carboxylic acid-based copolymer, an ethylene-vinyl acetate copolymer (EVA), an ethylene-α-olefin copolymer elastomer, a polypropylene, a propylene-based copolymer (copolymer of propylene and an α-olefin other than propylene), a polybutene, and other olefin-based (co)polymers, and polymer blends of these. Examples of the α-olefin include propylene, 1-butene, 1-pentene, 1-hexene, 1-octene, 1-decene, 1-dodecene, and 4-methyl-1-pentene.

Among these, from the viewpoint of having excellent heat-sealability, it is preferable that the thermoplastic resin (C1) includes a polyolefin, and it is more preferable that the thermoplastic resin (C1) includes at least one selected from the group consisting of a low-density polyethylene (LDPE), a linear low-density polyethylene (LLDPE), an ethylene-α-olefin copolymer elastomer, polypropylene, and a propylene-based copolymer (copolymer of propylene and an α-olefin other than propylene).

The content of the thermoplastic resin (C1) in the heat-sealable layer (C) according to the present embodiment is, when the total amount of the heat-sealable layer (C) is designated as 100% by mass, preferably more than or equal to 50% by mass and less than or equal to 100% by mass, more preferably more than or equal to 70% by mass and less than or equal to 100% by mass, even more preferably more than or equal to 90% by mass and less than or equal to 100% by mass, and particularly preferably more than or equal to 95% by mass and less than or equal to 100% by mass. Thereby, the balance between the adhesiveness between the heat-sealable layer (C) and the ionomer resin layer (B), heat-sealability, and the like can be further improved.

In the heat-sealable layer (C) according to the present embodiment, a component other than the thermoplastic resin (C1) can be incorporated to the extent that does not impair the purpose of the present invention. The other component is not particularly limited; however, examples include a plasticizer, an oxidation inhibitor, an ultraviolet absorber, an antistatic agent, a surfactant, a coloring agent, a photostabilizer, a foaming agent, a lubricating agent, a nucleating agent, a crystallization accelerator, a crystallization retarder, a catalyst deactivator, a thermoplastic resin other than the thermoplastic resin (C1), a thermosetting resin, an inorganic filler, an organic filler, an impact resistance improver, a slipping agent, a crosslinking agent, a crosslinking aid, a tackifier, a silane coupling agent, a processing aid, a mold releasing agent, a hydrolysis inhibitor, a heat-resistant stabilizer, an antiblocking agent, an antifogging agent, a flame retardant, a flame retardant aid, a light diffusing agent, an antibacterial agent, an antifungal agent, a dispersant, and other resins. The other components may be used singly, or two or more kinds thereof may be used in combination.

### <Other layer>

The laminated film 10 according to the present embodiment may be configured to include only two layers, namely, the substrate layer (A) and the ionomer resin layer (B), or may be configured to include only three layers, namely, a substrate layer (A), an ionomer resin layer (B), and a heat-sealable layer (C). From the viewpoint of imparting various functions to the laminated film 10, the laminated film 10 may have a layer other than the three layers (hereinafter, also referred to as other layer) . Examples of the other layer include a foamed layer, a metal layer, an inorganic layer, a gas barrier layer, a hard coat layer, an adhesive layer, an antireflective layer, an antifouling layer, and an anchor coat layer. The other layers may be used singly, or two or more layers may be used in combination.

### <Use applications>

The laminated film 10 according to the present embodiment can be suitably used as a packaging material used for packaging, for example, food products, pharmaceutical products, industrial goods, daily goods, and cosmetic products, and the laminated film 10 can be used particularly suitably as a food packaging material.

### 2. Method for producing laminated film

It is preferable that the method for producing the laminated film 10 according to the present embodiment includes an extrusion step of performing extrusion coating of a resin composition including an ionomer of ethylene-unsaturated carboxylic acid-based copolymer (B1) on a substrate layer (A) and thereby forming an ionomer resin layer (B) on the substrate layer (A) . That is, it is preferable that the ionomer resin layer (B) of the laminated film 10 according to the present embodiment is an extrusion coating processed layer formed according to an extrusion coating method.

When an extrusion coating method is used, the resin temperature at the time of molding can be increased as compared to other film-forming methods, and it becomes possible to coat the substrate layer (A) with a resin composition including an ionomer of ethylene-unsaturated carboxylic acid-based copolymer (B1) in a molten state.

That is, according to the method for producing the laminated film 10 according to the present embodiment, an ionomer resin layer (B) can be formed on a substrate layer (A) stably with high accuracy.

The molding apparatus and molding conditions for the extrusion step are not particularly limited, and conventionally known molding apparatuses and molding conditions can be employed. Regarding the molding apparatus, a T-die extruder or the like can be used. Furthermore, regarding the molding conditions, the molding conditions used for any known extrusion coating method can be employed.

In the method for producing the laminated film 10 according to the present embodiment, the extrusion coating temperature for the extrusion step is not particularly limited because the extrusion coating temperature is set as appropriate depending on the type or blend of the ionomer of ethylene-unsaturated carboxylic acid-based copolymer (B1). However, from the viewpoint of obtaining satisfactory film-forming properties, the extrusion coating temperature is preferably 200°C or higher, more preferably 250°C or higher, and particularly preferably 280°C or higher.

The upper limit of the extrusion coating temperature for the extrusion step is not particularly limited; however, the extrusion coating temperature is, for example, 350°C or lower.

### 3. Packaging material

The packaging material according to the present embodiment includes at least a layer formed by the laminated film 10 according to the present embodiment. Furthermore, the packaging material according to the present embodiment may use the laminated film 10 according to the present embodiment in some part, or may use the laminated film 10 according to the present embodiment in the entirety of the packaging material.

The shape of the packaging material according to the present embodiment is not particularly limited; however, examples include shapes such as a sheet-like shape, a film-like shape, and a bag-like shape.

The bag-like form is not particularly limited; however, examples include a three-way bag, a four-way bag, a pillow bag, a gusseted bag, and a stick bag.

The packaging material according to the present embodiment can be suitably used as a packaging material used for packaging, for example, food products, pharmaceutical products, industrial goods, daily goods, and cosmetic products, and the packaging material can be used particularly suitably as a food packaging material.

### 4. Package

The package according to the present embodiment includes the packaging material according to the present embodiment and an article packaged using the packaging material.

Examples of the article include food products, pharmaceutical products, industrial goods, and daily goods.

Thus, embodiments of the present invention have been described with reference to the drawings; however, these are only examples of the present invention, and various configurations other than those described above may also be employed.

### [EXAMPLES]

Hereinafter, the present invention will be specifically described based on Examples; however, the present invention is not intended to be limited to these Examples.

The details of the materials used for the production of the laminated film are as follows.

### <Substrate layer (A)>

Substrate layer 1: PET/LDPE/AL (laminated film of a polyethylene terephthalate film (thickness: 12 um) coated with an anchor coating agent, a low-density polyethylene film (MFR: 7.2 g/10 min, density 917 kg/m³, and thickness: 15 µm), and an Al foil (thickness: 7 pm))

### <Resin layer (B)>

### (Ionomer of ethylene-unsaturated carboxylic acid-based copolymer (B1))

IO-1: Ionomer of ethylene-methacrylic acid copolymer (ethylene content: 90 mass%, methacrylic acid content: 10 mass%, metal ion: zinc, degree of neutralization: 60 mol%, MFR: 1.8 g/10 min)

IO-2: Ionomer of ethylene-methacrylic acid copolymer (ethylene content: 90 mass%, methacrylic acid content: 10 mass%, metal ion: zinc, degree of neutralization: 73 mol%, MFR: 1.0 g/10 min)

IO-3: Ionomer of ethylene-methacrylic acid copolymer (ethylene content: 85 mass%, methacrylic acid content: 15 mass%, metal ion: zinc, degree of neutralization: 59 mol%, MFR: 0.9 g/10 min)

IO-4: Ionomer of ethylene-methacrylic acid copolymer (ethylene content: 85 mass%, methacrylic acid content: 15 mass%, metal ion: sodium, degree of neutralization: 54 mol%, MFR: 0.9 g/10 min)

IO-5: Ionomer of ethylene-methacrylic acid copolymer (ethylene content: 85 mass%, methacrylic acid content: 15 mass%, metal ion: zinc, degree of neutralization: 23 mol%, MFR: 5.0 g/10 min)

IO-6: Ionomer of ethylene-methacrylic acid copolymer (ethylene content: 90 mass%, methacrylic acid content: 10 mass%, metal ion: sodium, degree of neutralization: 50 mol%, MFR: 1.3 g/10 min)

IO-7: Ionomer (product name: HIMILAN 1601, manufactured by DuPont-Mitsui Polychemicals Co., Ltd.)

### (Low-density polyethylene)

LDPE1 (low-density polyethylene, MFR: 7.2 g/10 min, density 917 kg/m³)

### <Heat-sealable layer (C)>

LLDPE1 (linear low-density polyethylene film, manufactured by Mitsui Chemicals Tohcello, Inc., product name: TUX-TCS)

LLDPE2 (linear low-density polyethylene film, manufactured by Mitsui Chemicals Tohcello, Inc., product name: TUX-HC)

LLDPE3 (linear low-density polyethylene film, manufactured by Mitsui Chemicals Tohcello, Inc., product name: TUX-MCS)

LLDPE4 (linear low-density polyethylene film, manufactured by Mitsui Chemicals Tohcello, Inc., product name: TUX-VCS)

LLDPE5 (linear low-density polyethylene film, manufactured by Tamapoly Co., Ltd., product name: LC-2, easy tearability-imparted type)

### [Examples 1 to 8, Comparative Examples 1 to 4, and Reference Example 1]

The ionomer of ethylene-unsaturated carboxylic acid-based copolymer (B1) or low-density polyethylene shown in Table 1 was extrusion coated between the Al foil of the substrate layer (A) and the heat-sealable layer (C), and thereby a resin layer (B) (ionomer resin layer (B) or low-density polyethylene layer) was formed on the substrate layer (A). Thus, laminated films having the layer configurations shown in Table 1 were respectively obtained. The conditions for extrusion coating were as follows.

Extruder: 65 mmφ extruder (L/D = 28)

Extrusion coating temperature (temperature under the die): 300°C, extrusion coating rate: 80 m/min, air gap: 110 mm

The following evaluations were respectively carried out for the laminated films thus obtained. The results thus obtained are respectively presented in Table 1.

### <Evaluation of easy tearability>

### (1) Evaluation by tactile sensation

A laminated film thus obtained was folded in half, and a notch of 5 mm was inserted into the folded part. Next, the ease of tearing at the time of cutting the laminated film back and forth with hands by means of the notch was judged by performing a comparative assessment by three panelists according to the following criteria and rating. Here, the flow direction (MD) and a perpendicular direction (TD) intersecting the flow direction of the ionomer resin layer (B) at the time of production of the laminated film were evaluated.
A: The film is easily torn off, or the film stretches slightly but is torn off.
B: The film is torn off with difficulties or not torn off, or the film stretches significantly and then is torn off.

### (2) Quantitative evaluation

The tear strengths of a laminated film in the MD direction and the TD direction were measured according to JIS K7128 (1998) under the conditions of the standard state (23°C, 50%RH) and a tensile rate of 200 mm/min, and tearability of the laminated film was evaluated.

In Comparative Examples 1 to 4 and Reference Example 1, since the tear strength in the TD direction was higher than 5.0 N, the tear strength in the MD direction was not measured.

The tearability was determined to be "A" by the above-mentioned tactile sensation, and a case in which the tear strength was 5.0 N or less in both the MD direction and the TD direction was considered to be satisfactory.

**[Table 1]**

| | Substrate layer (A) | Resin layer (B) | | | | | | | Heat-sealable layer (C) | | Evaluation of easy tearability | | | |
|---|---|---|---|---|---|---|---|---|---|---|---|---|---|---|
| | | Resin type | Metal ion content | Metal ion type | MFR | Content of methacrylic acid (X) | Degree of metal neutralization (Y) | Thickness | | | Tear strength (N) | | Evaluation of tactile sensation | |
| | | | | | g/10min | mass% | mol% | µm | Resin type | Thickness [µm] | MD direction | TD direction | MD direction | TD direction |
| Example 1 | PET/LDPE/Al | IO-1 | 6.0 | Zn | 2 | 10 | 60 | 15 | LLDPE1 | 30 | 0.6 | 4.5 | A | A |
| Example 2 | PET/LDPE/Al | 10-2 | 7.3 | Zn | 1 | 10 | 73 | 15 | LLDPE1 | 30 | 0.4 | 0.5 | A | A |
| Example 3 | PET/LDPE/Al | 10-3 | 8.8 | Zn | 1 | 15 | 59 | 15 | LLDPE1 | 30 | 0.7 | 0.8 | A | A |
| Example 4 | PET/LDPE/Al | 10-4 | 8.1 | Na | 1 | 15 | 54 | 15 | LLDPE1 | 30 | 1.8 | 4.5 | A | A |
| Example 5 | PET/LDPE/Al | 10-2 | 7.3 | Zn | 1 | 10 | 73 | 15 | LLDPE2 | 30 | 2.5 | 4.4 | A | A |
| Example 6 | PET/LDPE/Al | 10-2 | 7.3 | Zn | 1 | 10 | 73 | 15 | LLDPE3 | 30 | 1.9 | 2.6 | A | A |
| Example 7 | PET/LDPE/Al | 10-2 | 7.3 | Zn | 1 | 10 | 73 | 15 | LLDPE4 | 30 | 0.4 | 0.6 | A | A |
| Example 8 | PET/LDPE/Al | 10-2 | 7.3 | Zn | 1 | 10 | 73 | 15 | LLDPE4 | 60 | 3.4 | 4.1 | A | A |
| Comparative Example 1 | PET/LDPE/Al | LDPE1 | - | - | - | - | - | 20 | LLDPE1 | 30 | Not measured | 5.7 | B | B |
| Comparative Example 2 | PET/LDPE/Al | LDPE1 | - | - | - | - | - | 20 | LLDPE5 | 30 | Not measured | 10.1 | A | B |
| Comparative Example 3 | PET/LDPE/Al | 10-5 | 3.5 | Zn | 5 | 15 | 23 | 15 | LLDPE1 | 30 | Not measured | 8.2 | A | B |
| Comparative Example 4 | PET/LDPE/Al | 10-6 | 5.0 | Na | 1 | 10 | 50 | 15 | LLDPE1 | 30 | Not measured | 8.5 | B | B |
| Reference Example 1 | PET/LDPE/Al | 10-7 | | | | | | 15 | LLDPE1 | 30 | Not measured | 8.0 or higher | B | B |

The laminated films of Examples 1 to 8 had excellent tearability in both the MD direction and the TD direction. In contrast, the laminated films of Comparative Examples 1 to 4 and Reference Example 1 had poor tearability in the TD direction.

## Claims

1. A laminated film (10) comprising at least:
a substrate film (A); and
an ionomer resin layer (B) provided on one surface of the substrate layer (A), the ionomer resin layer (B) including an ionomer of ethylene-unsaturated carboxylic acid-based copolymer (B1),
wherein when a content of unsaturated carboxylic acid in the ethylene-unsaturated carboxylic acid-based copolymer (B2) constituting the ionomer of ethylene-unsaturated carboxylic acid-based copolymer (B1) is designated as X [mass%], and a degree of neutralization of the ionomer of ethylene-unsaturated carboxylic acid-based copolymer (B1) is designated as Y [mol%],
a metal ion content represented by the formula: X × Y / 100 is more than 5.0 and less than or equal to 20.0, and
wherein a content of the ionomer of ethylene-unsaturated carboxylic acid-based copolymer (B1) in the ionomer resin layer (B) is 70% by mass or more and 100% by mass or less, when the total amount of the ionomer resin layer (B) is designated as 100% by mass.

2. The laminated film (10) according to claim 1,
wherein tear strengths of the laminated film in the MD direction and the TD direction of the ionomer resin layer (B) as measured according to JIS K7128 (1998) are respectively 5.0 N or less.

3. The laminated film (10) according to claim 1 or 2, wherein a melt flow rate (MFR) of the ionomer of ethylene-unsaturated carboxylic acid-based copolymer (B1) as measured according to JIS K7210:1999 under conditions of 190°C and a load of 2,160 g is more than or equal to 0.1 g/10 minutes and less than or equal to 30 g/10 minutes.

4. The laminated film (10) according to any one of claims 1 to 3, wherein a thickness of the ionomer resin layer (B) is 5 um or more.

5. The laminated film (10) according to any one of claims 1 to 4, wherein the ionomer resin layer (B) is an extrusion coating processed layer.

6. The laminated film (10) according to any one of claims 1 to 5, wherein the unsaturated carboxylic acid constituting the ethylene-unsaturated carboxylic acid-based copolymer (B2) includes at least one selected from acrylic acid and methacrylic acid.

7. The laminated film (10) according to any one of claims 1 to 6, wherein a metal ion constituting the ionomer of ethylene-unsaturated carboxylic acid-based copolymer (B1) includes at least one selected from sodium ion, zinc ion, and magnesium ion.

8. The laminated film (10) according to any one of claims 1 to 7, wherein the substrate layer (A) includes at least one selected from the group consisting of a metal foil, a polyolefin film, a polyester film, a polyamide film, and a cellophane.

9. The laminated film (10) according to claim 8,
wherein the substrate layer (A) includes a metal foil.

10. The laminated film (10) according to any one of claims 1 to 9, further comprising a heat-sealable layer (C).

11. The laminated film (10) according to claim 10,
wherein the heat-sealable layer (C) includes a polyolefin.

12. A packaging material comprising at least a layer formed from the laminated film (10) according to any one of claims 1 to 11.

13. A package comprising the packaging material according to claim 12 and an article packaged with the packaging material.

## Patentansprüche

1. Verbundfolie (10), umfassend mindestens:
eine Trägerfilm (A); und
eine Ionomerharzschicht (B), vorgesehen auf einer Oberfläche der Trägerschicht (A), wobei die Ionomerharzschicht (B) ein Ionomer eines Ethylen/ungesättigte Carbonsäure-basierten Copolymers (B1) umfasst,
wobei, wenn ein Anteil von ungesättigter Carbonsäure in dem Ethylen/ungesättigte Carbonsäure-basierten Copolymer (B2), das das Ionomer des Ethylen/ungesättigte Carbonsäure-basierten Copolymers (B1) bildet, als X [Masse-%] bezeichnet wird und ein Neutralisationsgrad des Ionomers des Ethylen/ungesättigte Carbonsäure-basierten Copolymers (B1) als Y [Mol-%] bezeichnet wird,
ein Metallionengehalt, dargestellt durch die Formel X · Y/100, mehr als 5,0 und kleiner als oder gleich 20,0 ist, und
wobei ein Anteil des Ionomers des Ethylen/ungesättigte Carbonsäure-basierten Copolymers (B1) in der Ionomerharzschicht (B) 70 Masse-% oder mehr und 100 Masse-% oder weniger beträgt, wenn die Gesamtmenge der Ionomerharzschicht (B) als 100 Masse-% festgelegt ist.

2. Verbundfolie (10) nach Anspruch 1,
wobei die Reißfestigkeiten der Verbundfolie in der MD-Richtung und der TD-Richtung der Ionomerharzschicht (B), gemessen gemäß JIS K7128 (1998), jeweils 5,0 N oder weniger betragen.

3. Verbundfolie (10) nach Anspruch 1 oder 2,
wobei eine Schmelzflussrate (MFR) des Ionomers des Ethylen/ungesättigte Carbonsäure-basierten Copolymers (B1), gemessen gemäß JIS K 7210: 1999 unter Bedingungen von 190 °C und einer Beladung von 2160 g, mehr als oder gleich 0,1 g/10 Minuten und kleiner als oder gleich 30 g/10 Minuten ist.

4. Verbundfolie (10) nach einem der Ansprüche 1 bis 3,
wobei eine Dicke der Ionomerharzschicht (B) 5 µm oder mehr beträgt.

5. Verbundfolie (10) nach einem der Ansprüche 1 bis 4,
wobei die Ionomerharzschicht (B) eine durch Extrusionsbeschichtung hergestellte Schicht ist.

6. Verbundfolie (10) nach einem der Ansprüche 1 bis 5,
wobei die ungesättigte Carbonsäure, die das Ethylen/ungesättigte Carbonsäure-basierte Copolymer (B2) bildet, mindestens eine, ausgewählt aus Acrylsäure und Methacrylsäure, umfasst.

7. Verbundfolie (10) nach einem der Ansprüche 1 bis 6,
wobei ein Metallion, das das Ionomer des Ethylen/ungesättigte Carbonsäure-basierten Copolymers (B1) bildet, mindestens eines, ausgewählt aus Natriumion, Zinkion und Magnesiumion, umfasst.

8. Verbundfolie (10) nach einem der Ansprüche 1 bis 7,
wobei die Trägerschicht (A) mindestens eines, ausgewählt aus der Gruppe bestehend aus einer Metallfolie, einer Polyolefinfolie, einer Polyesterfolie, einer Polyamidfolie und einem Zellglas, umfasst.

9. Verbundfolie (10) nach Anspruch 8,
wobei die Trägerschicht (A) eine Metallfolie umfasst.

10. Verbundfolie (10) nach einem der Ansprüche 1 bis 9, weiterhin umfassend eine heißsiegelbare Schicht (C).

11. Verbundfolie (10) nach Anspruch 10,
wobei die heißsiegelbare Schicht (C) ein Polyolefin umfasst.

12. Verpackungsmaterial, umfassend mindestens eine Schicht, die aus der Verbundfolie (10) nach einem der Ansprüche 1 bis 11 gebildet ist.

13. Verpackung, umfassend das Verpackungsmaterial nach Anspruch 12 und einen mit dem Verpackungsmaterial verpackten Artikel.

## Revendications

1. Film stratifié (10) comprenant au moins :
un film d'un substrat (A) ; et
une couche d'une résine ionomère (B) disposée sur une surface de la couche de substrat(A), la couche d'une résine ionomère (B) incluant un ionomère obtenu à partir d'un copolymère éthylène / acide carboxylique insaturé (B1),
où quand une teneur en l'acide carboxylique insaturé du copolymère éthylène / acide carboxylique insaturé (B2) constituant l'ionomère obtenu à partir d'un copolymère éthylène / acide carboxylique insaturé (B1) est désignée par X [% en masse] et un degré de neutralisation de l'ionomère obtenu à partir d'un copolymère éthylène / acide carboxylique insaturé (B1) est désigné par Y [% en moles],
une teneur en ions métalliques, représentée par la formule : X × Y / 100, est plus que 5,0 et inférieure ou égale à 20,0 et
où une teneur en l'ionomère obtenu à partir d'un copolymère éthylène / acide carboxylique insaturé (B1) contenu dans la couche d'une résine ionomère (B) est égale ou supérieure à 70 % en masse et inférieure ou égale à 100 % en masse, la quantité totale de la couche d'une résine ionomère (B) étant définie comme représentant 100 % en masse.

2. Film stratifié (10) selon la revendication 1,
où les résistances à la rupture du film stratifié dans la direction longitudinale et dans la direction transversale de la couche d'une résine ionomère (B), telles que mesurées conformément à la norme JIS K7128 (1998), sont inférieures ou égales à 5,0 N, respectivement.

3. Film stratifié (10) selon la revendication 1 ou 2,
où un indice de fluidité à chaud (IFC) de l'ionomère obtenu à partir d'un copolymère éthylène / acide carboxylique insaturé (B1), tel que mesuré conformément à la norme JIS K7210 (1999) à 190 °C et sous une charge de 2,160 g, est égal ou plus que 0,1 g/10 minutes et inférieur ou égal à 30 g/10 minutes.

4. Film stratifié (10) selon l'une quelconque des revendications 1 à 3,
où une épaisseur de la couche d'une résine ionomère B) est égale ou supérieure à 5 um.

5. Film stratifié (10) selon l'une quelconque des revendications 1 à 4,
où la couche d'une résine ionomère (B) est une couche obtenue par un procédé de couchage par extrusion.

6. Film stratifié (10) selon l'une quelconque des revendications 1 à 5,
où l'acide carboxylique insaturé constituant le copolymère éthylène / acide carboxylique insaturé (B2) comprend au moins un sélectionné parmi un acide acrylique et un acide méthacrylique.

7. Film stratifié (10) selon l'une quelconque des revendications 1 à 6,
où un ion métallique constituant l'ionomère obtenu à partir d'un copolymère éthylène / acide carboxylique insaturé (B1) comprend au moins un sélectionné parmi un ion sodium, un ion zinc et un ion magnésium.

8. Film stratifié (10) selon l'une quelconque des revendications 1 à 7,
où la couche d'un substrat (A) comprend au moins un sélectionné dans le groupe consistant en une feuille métallique, un film polyoléfine, un film polyester, un film polyamide et un cellophane.

9. Film stratifié (10) selon la revendication 8,
où la couche d'un substrat (A) comprend une feuille métallique.

10. Film stratifié (10) selon l'une quelconque des revendications 1 à 9, comprenant en outre une couche thermosoudable (C).

11. Film stratifié (10) selon la revendication 10,
où la couche thermosoudable (C) comprend une polyoléfine.

12. Matériau d'emballage comprenant au moins une couche formée à partir du film stratifié (10) selon l'une quelconque des revendications 1 à 11.

13. Emballage comprenant le matériau d'emballage selon la revendication 12 et article emballé avec le matériau d'emballage.
